# EUROPEAN PATENT APPLICATION

(11) **EP 1 837 641 A1**
(43) Date of publication of application: **26.09.2007**
(21) Application number: 07002966.5
(22) Date of filing: 13.02.2007
(51) Int. Cl.: G01N 1/22, G01N 1/26

(54) **Continuous emission sampling system**

(30) Priority: 22.03.2006 IT mi20060523
(71) Applicant: TCR Tecora S.r.l., 20094 Corsico MI (IT)
(72) Inventor: Ruffolo, Gabriele, c/o TCR Tecora S.r.l., 20094 Corsico (IT)
(74) Representative: Simino, Massimo

(57) **Abstract**

The present invention addresses a stack emission sampling system for sampling stack emissions, which is composed of a control unit (6), with a plurality of sampling unit (1, 2, 3, 4) connected thereto. The control unit can automatically control each of the sampling units (1, 2, 3, 4).

## Description

The present invention relates to a system for continuous sampling of emissions, particularly dioxin and furan emissions from industrial stacks.

It is known that industrial stack emissions contain harmful gases, including dioxins, furans and POPs, and that national laws impose control of such emissions.

Various emission control systems have been developed heretofore in the art; for example, systems having a sampling unit and a control unit: the sampling unit is placed on the stack, at the mouth thereof, and has probes for measuring the concentration of the monitored gases within the volume of intake gases; the control unit, displaced from the sampling unit, is connected thereto and provides first processing of data detected by the sampling unit.

Usually, sampling units and control units are permanently connected, using connection means that allow transfer of both a data signal, and a drawn sample, composed of a gas phase, a liquid phase and purified service gas.

The transport of the liquid phase. i.e. water, allows to determine the amount of water in flue gases in a position where such a measurement is easier than at the stack mouth, so that the detected values may be corrected considering the water content in sampled flue gases.

The transport of purified service gas allows the sampling unit to receive a gas that is clean and relatively cold (as compared with flue gas, having temperatures of up to many hundreds of degrees), so that such gas may be used to keep the probes of the sampling unit clean.

These probes of the sampling unit should be protected from stack flue gases when they are in an idle state, and do not collect data, by blowing clean gas countercurrent to the flue gases, to prevent the latter from contaminating and/or damaging the probes.

By increasing the velocity of this countercurrent flow above the value required for counterbalancing the flue gas flow, the probes may be "washed".

The existing systems are capable of taking samples from one stack at a time and at one point only and, when several stacks have to be sampled, there have to be provided as many systems as there are stacks and/or points of one stack whereat the flue gases are to be sampled. Also, in the more likely case that one sampling system is only provided, such system has to be completely dismantled after one measurement to be mounted to a different stack for the next measurement.

Furthermore, the probes have elements for collecting hazardous gases, such as dioxins, furans, POPs, etc. which have a limited collection capacity, also known as "life" which, in turn, determines the maximum duration of the sampling survey.

As a result, whenever the data collection campaign to be carried out is required to have a longer duration than the maximum "life" of the collection elements of the probe, it will be necessary to stop measurements, collect the sample to be analyzed, introduce a new sample collection element in the probe and start a new measurement, which process will involve costs associated to the analysis of the collection element and to related activities (such as down times).

In view of the above prior art, the object of this invention is to provide a system and a method that allow to carry out more efficient flue gas sampling surveys than heretofore.

Also, a second object of this invention is to provide a system and a method that allow to carry out sampling surveys of longer duration than with existing systems, using the same type of probes.

According to the present invention, this object is fulfilled by a sampling unit as defined in claim 1. In another aspect, this object is fulfilled by a control unit as defined in claim 6. In yet another aspect, this object is fulfilled by a system as defined in claim 7. In a further aspect, this object is fulfilled by a method as defined in claim 8.

The features and advantages of the invention will appear from the following detailed description of one practical embodiment, which is given by way of non limiting example with reference to the annexed drawings, in which:
- Figure 1 is a connection diagram of a apparatus according to the present invention;
- Figure 2 is an operation diagram of a system having two sampling units according to the present invention.

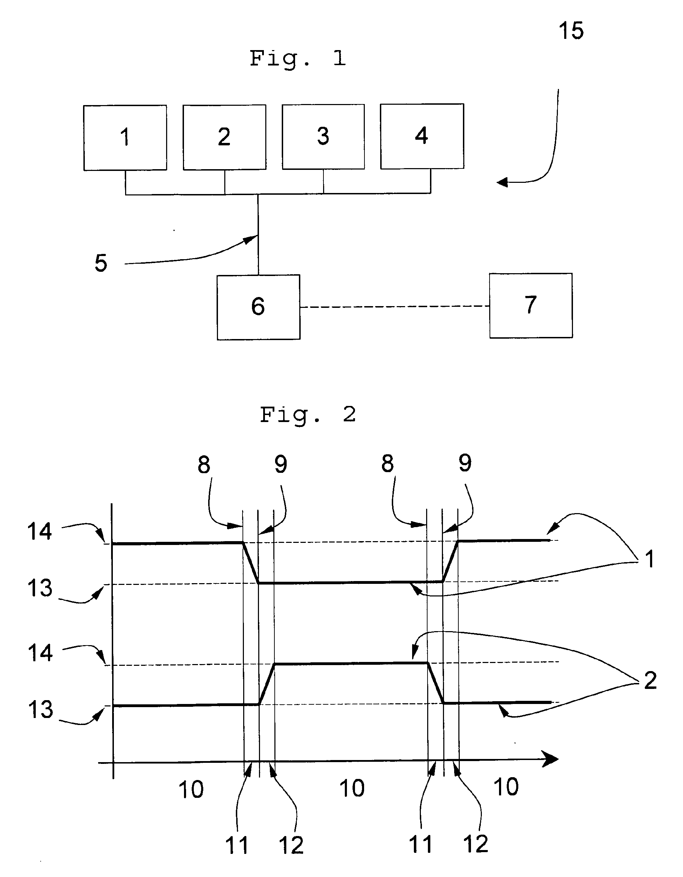

As shown in Figure 1, the system 15 of the present invention comprises a control unit 6, one or more separate sampling units 1, 2, 3, 4 to be connected to the control unit by suitable connection means 5 and optionally a remote unit 7 connected to the control unit 6.

In a particularly advantageous embodiment, there are two or more sampling units 1, 2, 3, 4 connected to a control unit 6, which can collect data from each sampling unit 1, 2, 3, 4 connected thereto.

Each sampling unit 1, 2, 3, 4 can be at least in an on state 14, in which it can collect the data it is designed to collect, and in an off state 13, in which it cannot collect any data and is configured to protect the probes contained therein from the external environment.

Obviously, the on state 14 is preceded by a transient switch-on state 12, during which control procedures are carried out, to check that the probes are in proper environmental conditions and connections 5 are perfectly tight.

On the other hand, the off state 13 is preceded by a transient switch-off state 11, during which probe protection means are actuated.

The sampling units 1, 2, 3, 4 may have means adapted to react in response to an alarm or emergency signal which indicates an abnormal condition and causes the relevant sampling unit 1, 2, 3, 4 to stop sampling and switch to the off state 13.

Once the alarm condition has been solved, the same means may bring the relevant sampling unit 1, 2, 3, 4 back to the on state 14.

Abnormal conditions to which the probe may react include power failures or loss of connection with the control unit 6, any shut down of the monitored plant or change exceeding the permitted limits or internal conditions that do not allow detections to be made with the required accuracy.

The sampling units 1, 2, 3, 4 also comprise means that can react to a switch-on 9 and/or switch signals 8 transmitted by the control unit 6, by switching to their on state 14 and/or off state 13 respectively.

The control unit 6 comprises means for generating both the switch-off signal 8, which can switch the sampling units 1, 2, 3, 4 to their off state 13, and the switch-on signal 9, which can switch the sampling units 1, 2, 3, 4 to their on state 14.

Thus, when the control unit 6 is connected to two or more sampling units 1, 2, 3, 4, it can selectively transmit the switch-on signal 9 and/or the switch-off signal 8, also generally indicated as switching signals 8, 9 to each sampling unit 1, 2, 3, 4, thereby influencing its operating state.

Optimal operation is achieved when the switch-off signal 8 coincides with the alarm signal and/or the switch-on signal 9 coincides with the end of alarm, whereby the structure of the sampling units 1, 2, 3, 4 need not be changed, the control units 6 simply having to be equipped with means for transmitting a signal to the sampling units 1, 2, 3, 4 which is received thereby as an alarm and/or end-of-alarm signals.

The greatest advantages are obtained when this alarm signal, i.e. the switch-off signal 8 consists in a loss of power delivered by the control unit 6 or in a failed connection with the control unit 6, whereas the end-of-alarm, i.e. the switch-on signal 9 consists in the restoration of the normal connection with the control unit 6.

This particular structure allows, for example, to connect four separate sampling units 1, 2, 3, 4, disposed on different stacks, to one control unit 6.

Assuming now that each sampling unit 1, 2, 3, 4 has probes in which the longest life of the sample collection elements is one month, a sampling survey may be carried out in which the samples are drawn continuously for one hour alternately and cyclically from each of the four stacks.

Although each sampling unit 1, 2, 3, 4 actually collects data one hour every four, the data so collected is still highly significant of the behavior of stacks during the whole survey, thereby affording dramatic cost savings.

Unlike in traditional systems, one control unit 6 and one set of sample collecting elements are only needed for the whole sampling survey.

Conversely, traditional systems would require four full systems, composed of one control unit, one sampling unit and four sets of sample collecting elements each.

This would involve much higher costs than the system of this invention, as well as extra operating costs associated to the replacement of new sample collecting elements in each sampling unit every month from the beginning of the survey.

On the contrary, the system of this invention allows to extend the survey period as desired; once the minimum sampling rate required to obtain a significant detection has been set, the system and the method of this invention allow considerable savings, both on the initial cost of the system, which only contains one control unit 6, and on operating costs, as it allows to optimize the life of the sample collecting element of one probe for a much longer time than the life of the sample collecting element of the probe, which is considered constantly operating.

As an alternative, two or more of the sampling units 1, 2, 3, 4, controlled by the control unit 6, may be associated to one stack, to extend the gas emission sampling survey for that stack.

As shown in Figure 2, the transition of the sampling operation from one sampling unit 1 to the next one 2, may be handled by the control unit 6 so that the two sampling intervals 10 are consecutive either or separated by a predetermined dead time.

Preferably, a short dead time (not shown in the diagram of Figure 2) is provided between two sampling intervals, which allows the first sampling unit 1 to complete its transient switch-off state 11, the second sampling unit 2 to complete its transient switch-on state 12 and any fluids (gas, water) in the connection means 5 to reach the control unit 6, thereby completing data collection for the first period.

The control unit 6 may be equipped with a PLC, user interfaces and hardware required for operation of the system; it can be connected to a remote unit 7, i.e. a PC based unit, allowing full remote control of the control unit 6.

The transient switch-on state 12 advantageously includes the procedures to check proper switching, tightness of pneumatic connections and restoration of the sampling data stored during the previous transient switch-off state 11 for the same stack.

The control unit 6, or the remote unit 7 that controls the control unit 6, may be programmed in such a manner as to allow timed start of the sampling period 10; advantageously it also allows prior determination of the desired type of sampling survey, by arbitrarily setting both the order with which the sampling units 1, 2, 3, 4 are switched on, and the length of the sampling period 10, i.e. the duration of the on state 14.

The only applicable limit is that the sampling periods 10 for the separate sampling units 1, 2, 3, 4 shall not overlap, because the connection means 5 between the various sampling units 1, 2, 3, 4 and the control unit 6 are at least partly in common.

For a wholly automatic management of the system 15, the fluid circuits (compressed air, sampled gases, coolant, etc.) in the sampling means 5 have control solenoid valves or similar devices.

While the present invention has been described with reference to a stack, those skilled in the art may make number of changes and variants to the arrangements as described hereinbefore to meet specific needs, for example using the system of the present invention for other types of gas exhaust ducts, such as chimneys or flues.

Therefore, the scope of the invention is intended to be as defined by the following claims.

## Claims

1. A sampling unit (1, 2, 3, 4) adapted to be associated to a stack for monitoring of gas emissions from such stack, wherein said sampling unit is susceptible of reversibly switching from:
- a first on state (14), in which said sampling unit can draw gas emission samples from the stack with which it is associated to
- a second off state (13), in which said sampling unit cannot draw gas emission samples from the stack with which it is associated;
**characterized in that** it comprises switching means, adapted to automatically switch the state of said sampling unit (1, 2, 3, 4) from off (13) to on (14) and/or vice versa.

2. A sampling unit (1, 2, 3, 4) as claimed in claim 1, further comprising means for receiving a signal from a separate control unit (6).

3. A sampling unit (1, 2, 3, 4) as claimed in claim 2, wherein said means for receiving the signal from a separate control unit (6) are adapted to trigger said switching means for automatically switching the state of said sampling unit (1, 2, 3, 4) from off (13) to on (14) and/or vice versa.

4. A sampling unit (1, 2, 3, 4) as claimed in any preceding claim, further comprising sampling probes and means for shielding said sampling probes.

5. A sampling unit (1, 2, 3, 4) as claimed in claim 4, wherein said shielding means comprise means for starting a protective gas flow.

6. A control unit (6) for controlling a sampling unit (1, 2, 3, 4) as claimed in any preceding claim, **characterized in that** it comprises means for transmitting a switching signal (8, 9) to said sampling unit (1, 2, 3, 4), said switching signal (8, 9) being adapted to switch the state of said sampling unit (1, 2, 3, 4) from off (13) to on (14) and/or vice versa.

7. A system (15) for monitoring stack emissions, comprising one or more sampling units (1, 2, 3, 4), each of said sampling units (1, 2, 3, 4) being susceptible of reversibly passing from
- a first on state (14), in which said sampling unit can draw gas emission samples from the stack with which it is associated to
- a second off state (13), in which said sampling unit cannot draw gas emission samples from the stack with which it is associated;
said system (15) further comprising:
- a separate control unit (6) for controlling said one or more sampling units (1, 2, 3, 4) and
- connection means (5) for putting said control unit (6) in communication with said sampling units (1, 2, 3, 4),
**characterized in that**:
- said control unit (6) comprises means adapted to generate a switching signal (8, 9) to automatically switch the state of said sampling unit (1, 2, 3, 4) from off (13) to on (14) and/or vice versa,
- said connection means (5) being adapted to transmit said switching signal (8, ) from said control unit (6) to at least one of said one or more sampling units (1, 2, 3, 4) and
- each of said one or more sampling units (1, 2, 3, 4) comprises switching means controlled by said switching signal (8, 9), said switching means being adapted to automatically switch the state of said sampling unit (1, 2, 3, 4) from off (13) to on (14) and/or vice versa.

8. A method for controlling a plurality of sampling units (1, 2, 3, 4) as claimed in any claim from 1 to 5, connected to one control unit (6) as claimed in claim 6 **characterized in that** it comprises the step in which said control unit (6) selectively transmits a switching signal (8, 9) to one of said sampling units (1, 2, 3, 4) to switch its state from off (13) to on (14) and/or vice versa.

9. A method as claimed in claim 8, wherein at each instant only one of said sampling units (1, 2, 3, 4) is in the on state (14).

10. A method as claimed in any claim from 8 to 9, wherein said sampling unit (1, 2, 3, 4) changes its state in response to a switching signal (8, 9) transmitted by said control unit (6).

11. A method as claimed in any claim from 8 to 10, wherein said switching signal (8, 9) is a switch-off signal (8), preferably coinciding with an alarm signal of at least one of said sampling units (1, 2, 3, 4) and/or is a switch-on signal (9), preferably coinciding with an end-of-alarm signal of at least one of said one or more sampling units (1, 2, 3, 4).

12. A method as claimed in claim 11, wherein said alarm signal (8) coincides with a power supply failure from said control unit (6) to said at least one sampling unit (1, 2, 3, 4) and said end-of-alarm (9) coincides with the restored power supply from said control unit (6) to said at least one sampling unit (1, 2, 3, 4).

13. A method as claimed in any claim from 8 to 12, wherein said control unit (6) triggers each of said sampling units (1, 2, 3, 4) in succession, preferably sequentially.

14. A method as claimed in any claim from 8 to 13, wherein said control unit (6) transmits a switching signal (8, 9) to the switched-on sampling unit (1), to switch it to the off state (13) prior to switching of the next sampling unit (2) to the on state (14).

15. A method as claimed in any claim from 8 to 14, wherein said sampling unit (1, 2, 3, 4) comprises sampling probes and means for protecting said sampling probes and switches to the off state after actuation of said means for protecting said sampling probes during the transient switch-off state (11).

16. A method as claimed in any claim from 8 to 15, wherein said protection means comprise means for generating a protective gas flow and said actuation involves the emission of said protective gas flow.
